# DEMANDE DE BREVET EUROPEEN

(11) **EP 3 469 892 A1**
(43) Date de publication de la demande: **17.04.2019**
(21) Numéro de dépôt: 18306341.1
(22) Date de dépôt: 11.10.2018
(51) Int. Cl.: A01K 1/015

(54) **EQUIPEMENT DE SOL ADAPTE A SURELEVER LES PATTES D'ANIMAUX D'ELEVAGE, PAR EXEMPLE POUR DES VACHES LAITIERES, AU SEIN D'UNE AIRE D'ALIMENTATION**

(30) Priorité: 12.10.2017 FR 1759544
(71) Demandeur: Bioret Agri-Logette Confort, 44390 Nort sur Erdre (FR)
(72) Inventeur: BIORET, Jean-Vincent, 44390 Petit Mars (FR)
(74) Mandataire: Jacobacci Coralis Harle

(57) **Abrégé**

L'invention concerne un équipement de sol adapté à surélever les pattes d'animaux d'élevage, par exemple pour des vaches laitières, au sein d'une aire d'alimentation (A) bordant une table d'affouragement (T).

Cet équipement de sol (1), en forme de plaque, comprend une embase inférieure (2) et un revêtement supérieur (3) qui est réalisé dans un matériau apte à subir une déformation élastique.

Ce revêtement supérieur (3) comporte avantageusement une bande longitudinale rainurée (5) qui borde ladite bordure longitudinale arrière (34) et qui s'étend sur au moins une partie de la largeur dudit revêtement supérieur (3).

## Description

### DOMAINE TECHNIQUE AUQUEL SE RAPPORTE L'INVENTION

La présente invention concerne, de manière générale, le domaine des équipements pour les enceintes d'élevage.

Elle concerne plus particulièrement les équipements de sol adaptés à surélever les pattes d'animaux d'élevage, par exemple pour des vaches laitières, au sein d'une aire d'alimentation bordant une table d'affouragement.

### ARRIERE-PLAN TECHNOLOGIQUE

Les animaux passent 50 à 60 % de leur temps sur l'aire d'alimentation.

Il est alors recommandé d'aménager le sol de cette aire d'alimentation de manière à éviter différents problèmes, notamment les affections des onglons résultant d'une humidité excessive et les interruptions de périodes d'alimentation pendant l'évacuation du fumier.

Un tel aménagement se présente généralement sous la forme d'une place d'alimentation surélevée, par exemple sous la forme d'une marche dont la largeur est comprise entre 50 et 60 cm ou sous la forme d'une stalle en béton autonettoyant dont la largeur est généralement comprise entre 1,5 m et 2 m.

Cet aménagement est normalement réalisé en béton, au moment de la construction de l'aire d'alimentation.

La fabrication a posteriori d'un tel aménagement sur une aire d'alimentation existante est en pratique complexe ; elle est en plus particulièrement dérangeante pour les animaux.

Il existe par conséquent un besoin d'une solution pour l'aménagement d'une place d'alimentation surélevée, aussi bien en rénovation qu'en neuf.

### OBJET DE L'INVENTION

Afin de remédier à l'inconvénient précité de l'état de la technique, la présente invention propose un équipement de sol adapté à surélever les pattes d'animaux d'élevage, par exemple pour des vaches laitières, au sein d'une aire d'alimentation bordant une table d'affouragement.

Cet équipement de sol, en forme de plaque, comprend :
- une embase inférieure comportant une face inférieure destinée à reposer sur le sol de ladite aire d'alimentation et une face supérieure opposée, et
- un revêtement supérieur, avantageusement stocké sous la forme de plaque ou de rouleau, rapporté sur la face supérieure de ladite embase inférieure, qui est réalisé dans un matériau apte à subir une déformation élastique et destiné à servir de surface d'appui pour les animaux.

La solution technique selon l'invention peut être mise en oeuvre aussi bien en rénovation que en neuf.

Cette solution technique présente encore les avantages suivants :
- bien être animal : l'animal est beaucoup moins dérangé lors de l'alimentation,
- économique : l'alimentation n'étant pas perturbée, la quantité ingérée est optimale, donc la production est améliorée,
- écologique : la surface de l'équipement étant peu ou pas sale, elle n'émet plus d'ammoniac,
- sanitaire : les pieds sont au sec pendant l'alimentation.

D'autres caractéristiques non limitatives et avantageuses de l'équipement de sol conforme à l'invention, prises individuellement ou selon toutes les combinaisons techniquement possibles, sont précisées ci-dessous.

De préférence, le revêtement supérieur est délimité par une bordure longitudinale avant, par une bordure longitudinale arrière et par deux bordures latérales,
lequel revêtement supérieur comporte une bande longitudinale rainurée qui borde ladite bordure longitudinale arrière et qui s'étend sur au moins une partie de la largeur dudit revêtement supérieur,
laquelle bande longitudinale rainurée comporte une pluralité de bandes d'appui qui sont séparées les unes des autres par des rainures destinées à recevoir les liquides s'écoulant sur ledit revêtement supérieur,
lesquelles rainures s'étendent perpendiculairement, ou au moins approximativement perpendiculairement, par rapport auxdites bordures longitudinales dudit revêtement supérieur,
lesquelles rainures comportent chacune une face de fond qui présente une pente descendante depuis une extrémité avant supérieure située du côté de la bordure longitudinale avant dudit revêtement supérieur jusqu'à une extrémité arrière inférieure débouchant au niveau de ladite bordure longitudinale arrière dudit revêtement supérieur.

La bande longitudinale rainurée présente avantageusement une largeur comprise entre 200 mm et 800 mm (de préférence de 350 et 600 mm), et/ou une épaisseur comprise entre 20 et 60 mm.

Selon un premier mode de réalisation, la bande longitudinale rainurée s'étend sur toute la largeur, ou au moins approximativement toute la largeur, du revêtement supérieur.

Selon un second mode de réalisation, la bande longitudinale rainurée s'étend sur une partie de la largeur du revêtement supérieur qui comporte deux bandes longitudinales juxtaposées :
- une bande longitudinale avant dont la face supérieure est dépourvue de rainures, et
- une bande longitudinale arrière formée par ladite bande longitudinale rainurée.

Dans ce second mode de réalisation, le revêtement supérieur présente avantageusement une largeur allant de 1200 à 2000 mm (par exemple de 1200 à 1600 mm pour les veaux et de 1600 à 2000 mm pour les animaux adultes).

Toujours dans ce second mode de réalisation, l'épaisseur de la bande longitudinale arrière est avantageusement supérieure à l'épaisseur de la bande longitudinale avant. Dans ce cas, l'embase inférieure comporte alors une partie longitudinale arrière et une partie longitudinale avant, s'étendant respectivement sous lesdites bandes longitudinales arrière et avant ; l'épaisseur de ladite partie longitudinale arrière est inférieure à l'épaisseur de ladite partie longitudinale avant.

Par ailleurs, le revêtement supérieur comporte avantageusement une face inférieure muni d'alvéoles débouchantes, avantageusement sous la forme d'une alternance de deux rangées transversales d'alvéoles :
- une première rangée transversale d'alvéoles disposée sous chaque bande d'appui, et
- une seconde rangée transversale d'alvéoles disposée sous chaque rainure,
et laquelle cote des alvéoles de ladite première rangée transversale est inférieure à la cote des alvéoles de ladite seconde rangée transversale.

De préférence, le long de la bordure arrière, la face inférieure comporte une rangée longitudinale d'alvéoles dont la forme correspond à la moitié des alvéoles de ladite première et/ou seconde rangée transversale, de manière à renforcer mécaniquement ladite bordure arrière.

Encore par ailleurs, l'embase inférieure consiste avantageusement en un caillebotis réalisée dans un matériau plastique.

Les bandes d'appui comportent avantageusement des gorges débouchant dans les rainures attenantes.

Selon un autre mode de réalisation, la face inférieure et la face supérieure de l'embase inférieure convergent, en direction d'une bordure longitudinale arrière, pour définir une pente descendante de la face supérieure du revêtement supérieure.

De préférence, la face supérieure du revêtement supérieure est en pente descendante sur toute sa largeur ou sur une bande longitudinale arrière.

Dans ce cas, par exemple, l'embase inférieure comporte une bande longitudinale arrière et une bande longitudinale avant. L'épaisseur de la bande longitudinale avant de l'embase inférieure est constante, et les faces opposées de la bande longitudinale arrière de l'embase inférieure convergent dans un sens orienté vers la bordure longitudinale arrière pour définir ladite bande longitudinale arrière en pente descendante.

L'équipement de sol comporte avantageusement une épaisseur allant de 50 à 100 mm, et une longueur allant de 1 m à 100 m.

La présente invention concerne encore une enceinte pour l'élevage d'animaux comprenant une aire d'alimentation pour animaux d'élevage qui est raccordée à une table d'affouragement via un cornadis. Au moins un équipement de sol selon l'invention est solidarisé avec le sol de ladite aire d'alimentation, le long dudit cornadis.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente, vue de côté et schématiquement, une aire d'alimentation pour animaux d'élevage qui est raccordée à une table d'affouragement via un cornadis, laquelle aire d'alimentation est aménagée avec un équipement de sol selon l'invention en forme de marche ;
- la figure 2 est une vue partielle et en perspective de l'aire d'alimentation selon la figure 1, montrant notamment la structure de l'équipement de sol selon l'invention ;

- la figure 3 est une vue partielle, selon un plan de coupe longitudinal, de l'équipement de sol selon les figures 1 et 2 ;
- la figure 4 est une vue en coupe transversale de l'équipement de sol selon la figure 3 ;
- la figure 5 montre la face inférieure du revêtement supérieur qui est muni d'alvéoles débouchantes ;
- la figure 6 représente, vue de côté et schématiquement, une aire d'alimentation pour animaux d'élevage dans laquelle l'équipement de sol selon l'invention est ici du type stalle ;
- la figure 7 est une vue partielle, selon un plan de coupe longitudinale, de l'équipement de sol selon la figure 6 ;
- la figure 8 est une vue en coupe transversale de l'équipement de sol selon les figures 6 et 7 ;
- la figure 9 est une vue en coupe transversale d'une variante de réalisation pour l'équipement de sol selon les figures 1 à 3 ;
- la figure 10 est une vue en coupe transversale d'une variante de réalisation pour l'équipement de sol selon les figures 6 à 8.

### Enceinte et aire d'alimentation

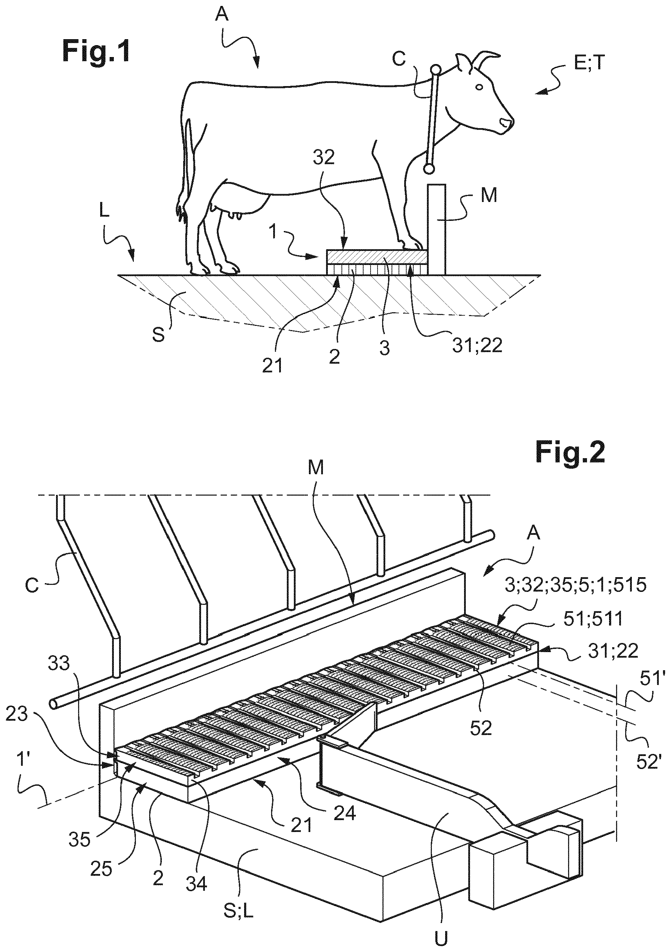

L'équipement de sol 1 selon l'invention, représenté sur les figures 1 à 10, consiste en un accessoire qui est destiné à équiper une enceinte E pour l'élevage d'animaux et qui est destiné à être solidarisé avec le sol S d'une aire d'alimentation A.

Par « animaux », on entend en particulier les bovins, en particulier les vaches laitières ou les bovins à viande.

L'enceinte d'élevage E consiste en un bâtiment délimité par un bâti et adapté à l'élevage souhaité (par exemple une étable dans le cas de bovins).

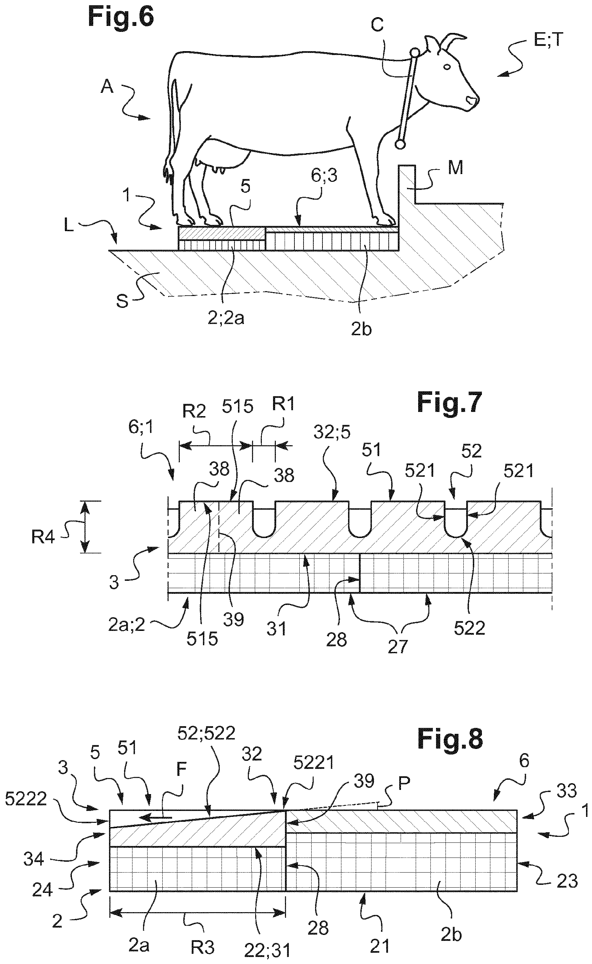

Le sol S de cette enceinte d'élevage consiste avantageusement en un sol réalisé en béton ou en bitume (figures 1 et 6).

Cette enceinte d'élevage E comprend différentes zones, notamment l'aire d'alimentation A qui est, d'un premier côté, longée par un couloir de circulation L et, d'un second côté, raccordée à une table d'affouragement T via un cornadis C (figures 1 et 6).

L'aire d'alimentation A correspond à la zone dans laquelle les animaux s'installent lorsqu'ils se nourrissent au niveau de la table d'affouragement T.

La table d'affouragement T (dite encore table d'alimentation, auge ou râtelier) est la zone dans laquelle les aliments sont déposés / acheminés pour les animaux.

Le cornadis C est le dispositif installé entre l'aire d'alimentation A et la table d'affouragement T, pour limiter les mouvements des animaux lorsqu'ils se nourrissent.

Le couloir de circulation L est emprunté par les animaux cheminant entre les différents espaces fonctionnels de l'enceinte d'élevage. Ce couloir de circulation L est avantageusement équipé d'un racleur U (figure 2).

### Equipement de sol

Tel qu'illustré schématiquement sur les figures 1 et 6, au moins un équipement de sol 1 selon l'invention est solidarisé avec le sol S de l'aire d'alimentation A.

Ledit au moins un équipement de sol 1 est disposé le long du cornadis C, avantageusement contre un muret d'auge M.

Un tel équipement de sol 1 est adapté à surélever certaines au moins des pattes (ou pieds) des animaux d'élevage qui sont présents dans l'aire d'alimentation A et qui sont en train de se nourrir.

Cet équipement de sol 1 est avantageusement adapté à être rapporté sur le sol S de l'aire d'alimentation A qui est avantageusement horizontal et dépourvu d'une place d'alimentation surélevée.

Pour cela, l'équipement de sol 1, en forme de plaque, comprend deux couches / parties superposées :
- une embase inférieure 2, destinée à reposer sur le sol, et
- un revêtement supérieur 3, rapporté sur ladite embase inférieure 2, qui est destiné à servir de surface d'appui pour les animaux.

De manière générale, un équipement de sol 1 présente les cotes suivantes :
- une épaisseur allant de 50 à 100 mm, et
- une longueur allant de 1 m à 100 m.

En fonction de sa longueur, un ou plusieurs équipements de sol 1 sont ainsi rapportés pour aménager tout ou partie de la longueur de l'aire d'alimentation A.

### Revêtement supérieur

Dans les différents modes de réalisation de l'invention, le revêtement supérieur 3 est réalisé dans un matériau apte à subir une déformation élastique.

Par « matériau apte à subir une déformation élastique », on entend les matériaux choisis parmi :
- les matériaux élastomères, à savoir par exemple le caoutchouc naturel, le caoutchouc « naturel synthétique » (ou poly-isoprène synthétique), le polybutadiène ou le styrène-butadiène, ou
- les matériaux plastiques ou élastomères thermoplastiques (TPE), à savoir par exemple le PVB (polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Ce revêtement supérieur 3 peut être réalisé mono-matériau ou multi-matériaux.

Sur le plan structurel, le revêtement supérieur 3 comporte deux faces opposées :
- une face inférieure 31, reposant sur l'embase inférieure 2,
- une face supérieure 32, destiné à servir de surface d'appui pour les animaux.

Ce revêtement supérieur 3 est encore délimité par une ceinture de bordures (avantageusement de forme rectangulaire) :
- une bordure longitudinale avant 33, destinée à venir à proximité du cornadis C et du muret d'auge M,
- une bordure longitudinale arrière 34, destinée à venir à distance du cornadis C et le long du couloir de circulation L, et
- deux bordures latérales 35, s'étendant entre les bordures longitudinales 33 et 34 précitées (figure 2).

Les bordures longitudinales 33, 34 s'étendent avantageusement parallèlement l'une par rapport à l'autre. La cote entre ces bordures longitudinales 33, 34 correspond à la largeur du revêtement supérieur 3.

Les bordures latérales 35 s'étendent avantageusement, d'une part, parallèlement l'une par rapport à l'autre et, d'autre part, perpendiculairement par rapport aux bordures longitudinales 33, 34 précitées. La cote entre ces bordures latérales 35 correspond à la longueur du revêtement supérieur 3.

Selon un mode de réalisation illustré sur les figures 1 à 8, la face supérieure 32 du revêtement supérieur 3 comporte avantageusement une bande longitudinale rainurée 5 qui borde la bordure longitudinale arrière 34 et qui s'étend sur au moins une partie de la largeur de ce revêtement supérieur 3 ; la bordure longitudinale arrière 34 forme ainsi la bordure libre de ladite bande longitudinale rainurée 5.

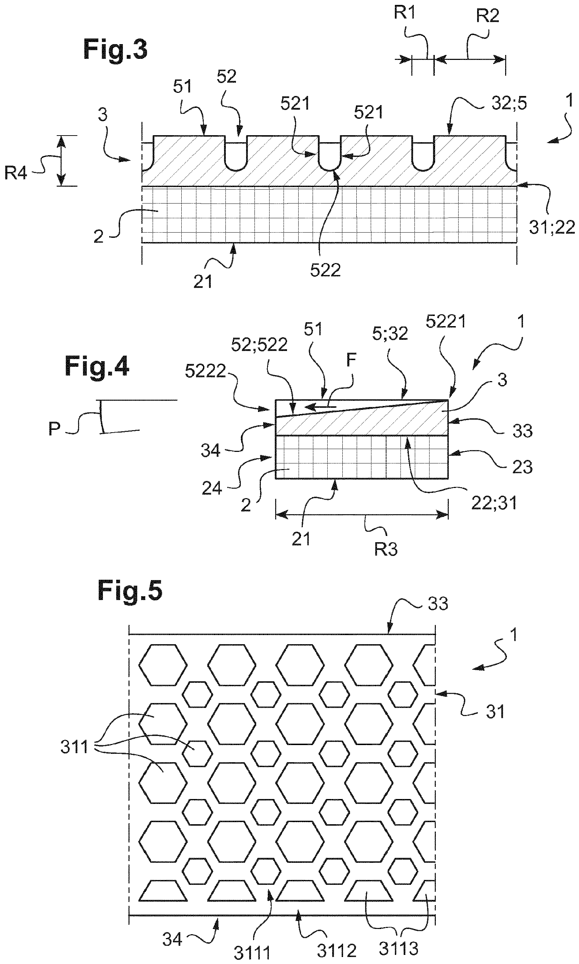

La bande longitudinale rainurée 5 comporte une pluralité de bandes d'appui 51 qui sont séparées les unes des autres par des rainures 52 destinées à recevoir les liquides s'écoulant sur ledit revêtement supérieur 3 (figures 3 et 7).

Les bandes d'appui 51 sont avantageusement adaptées à subir une déformation en enfoncement, cela d'au moins 1 mm (et de préférence comprise entre 1 et 5 mm), lors de l'appui du pied de l'animal ou d'une personne.

Chaque bande d'appui 51 de la face supérieure 32 est délimitée entre deux rainures 52.

Chaque bande d'appui 51 a une forme générale rectangulaire. Elle comporte un axe longitudinal 51' qui s'étend perpendiculairement à un axe longitudinal 1' de l'équipement de sol 1 (figure 2).

En d'autres termes, l'axe longitudinal 51' de chaque bande d'appui 51 s'étend perpendiculairement, ou au moins approximativement perpendiculairement, par rapport aux bordures longitudinales 33, 34 du revêtement supérieur 3.

Ces bandes d'appui 51 s'étendent avantageusement dans un même plan, ou au moins approximativement dans un même plan (figures 3 et 7).

Ces bandes d'appui 51 ont de préférence une surface plane horizontale, voire une surface courbe convexe. Ces bandes d'appui 51 peuvent aussi présenter une légère pente descendante vers la bordure longitudinale arrière 34 ; cette pente est par exemple au maximum de 1 à 4 %.

Pour une adhérence optimale, ces bandes d'appui 51 sont avantageusement munies de reliefs antidérapants qui sont classiques en soi.

Les bandes d'appui 51 comportent avantageusement des gorges 511 qui s'étendent latéralement (transversalement par rapport à l'axe longitudinal 51' des bandes d'appui 51) et débouchent dans les rainures 52 attenantes (figure 2).

Les gorges 511 d'une bande d'appui 51 sont destinées à participer au guidage de l'écoulement des liquides depuis la bande d'appui 51 jusqu'aux rainures 52 associées.

De leur côté, les rainures 52 constituent des structures de genre rigoles ou gouttières, s'ouvrant vers le haut et au travers de la face supérieure 32 du revêtement supérieur 3.

Ces rainures 52 sont aptes à collecter et à conduire (par gravité) les éventuels liquides s'écoulant sur le revêtement supérieur 3, cela jusqu'au couloir de circulation L, de sorte que ces liquides stagnent le moins possible sur les bandes d'appui 51 (et plus généralement sur la face supérieure 32 du revêtement supérieur 3).

Par « liquide » on entend en particulier les déjections liquides produites par les animaux de l'élevage, en particulier leur urine.

En l'espèce, les rainures 52 sont rectilignes. Elles s'étendent parallèlement les unes par rapport aux autres ; elles s'étendent en outre perpendiculairement par rapport à l'axe longitudinal 1' de l'équipement de sol 1 et par rapport aux bordures longitudinales 33, 34 du revêtement supérieur 3 (figure 2).

De préférence, les rainures 52 sont réparties régulièrement sur la longueur de l'équipement de sol 1 (entre les bordures latérales 35 du revêtement supérieur 3).

Chaque rainure 52 comporte deux faces latérales 521 raccordées par une face de fond 522 (figures 3 et 7).

Les deux faces latérales 521 s'étendent parallèlement, ou au moins approximativement parallèlement, l'une par rapport à l'autre. Ces deux faces latérales 521 sont avantageusement destinées à s'étendre verticalement.

Chaque rainure 52 comporte ainsi un axe longitudinal 52' qui s'étend parallèlement à ces deux faces latérales 521 ; et les axes longitudinaux 52' des différentes rainures 5 s'étendent parallèlement les uns par rapport aux autres et perpendiculairement par rapport aux bordures longitudinales 33, 34 du revêtement supérieur 3 (figure 2).

La face de fond 522 des rainures 5 comporte avantageusement une section arquée concave (figures 3 et 7). Une telle section a l'intérêt d'augmenter la vitesse en cheminement des fluides.

Cette face de fond 522 se présente sous la forme d'un segment incliné.

Par « segment incliné », on entend en particulier une portion de surface qui est avantageusement plane et qui est destiné à former une pente par rapport à l'horizontale.

Chaque face de fond 522 comporte ainsi une pente descendante délimitée par deux extrémités, à savoir une pente s'étendant depuis une extrémité avant supérieure 5221 jusqu'à une extrémité arrière inférieure 5222 (figures 4 et 8).

En d'autres termes, chaque face de fond 522 est agencé de sorte que :
- son extrémité avant supérieure 5221 se situe du côté de la bordure longitudinale avant 33 du revêtement supérieur 3, et
- son extrémité arrière inférieure 5222 débouche au niveau de la bordure longitudinale arrière 34 du revêtement supérieur 3.

Une telle face de fond 522 est ainsi destinée à assurer un écoulement des liquides dans un sens orienté depuis son extrémité avant supérieure 5221 vers son extrémité arrière inférieure 5222, jusqu'à son écoulement au travers de cette dernière en direction du couloir de circulation L (comme illustré par les flèches F représentées sur les figures 4 et 8).

La bande longitudinale rainurée 5 comporte avantageusement des cotes particulières, telles que décrites ci-dessous.

Tel que représenté sur les figures 3 et 8 :
- chaque rainure 52 est en particulier définie par sa largeur R1, c'est-à-dire la distance séparant ses deux faces latérales 521, et
- chaque bande d'appui 51 est définie par sa largeur R2, c'est-à-dire la distance séparant les deux rainures 52 attenantes.

De même, tel qu'illustré sur les figures 4 et 8, la largeur R3 de la bande longitudinale rainurée 5 correspond à la longueur de ces rainures 52 qui est définie par la distance horizontale séparant les extrémités avant supérieure 5221 et arrière inférieure 5222 de leurs faces de fond 522.

Cette bande longitudinale rainurée 5 comporte encore une cote en épaisseur R4 correspondant à la hauteur des bandes d'appui 51.

La bande longitudinale rainurée 5 comporte avantageusement les dimensions suivantes, seules ou en combinaison :
- des rainures 52 ayant une largeur R1 allant de 15 à 50 mm,
- les bandes d'appui 51 ayant une largeur R2 allant de 50 à 500 mm,
- une largeur R3 de la bande longitudinale rainurée 5 (correspondant à la longueur des rainures 52) comprise entre 350 et 600 mm,
- une épaisseur R4 de la bande longitudinale rainurée 5 comprise entre 20 et 60 mm.

En outre, la face de fond 522 des rainures 52 présente avantageusement une pente P allant de 2% à 7% (figures 4 et 8).

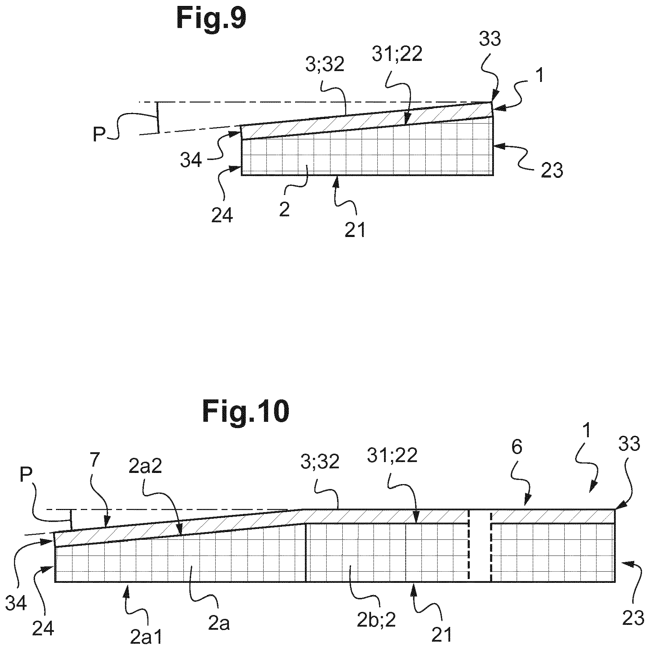

De manière alternative, tel que représentée sur les figures 9 et 10, la face supérieure 32 du revêtement supérieur 3 peut être dépourvue de ladite bande longitudinale rainurée 5.

Cette face supérieure 32 est alors avantageusement lisse sur toute sa largeur, voire avec un relief antidérapant (par exemple dans le cas de l'équipement du type marche).

Dans ce cas, et comme développé ci-après, le revêtement supérieur 3 possède une épaisseur constante (par exemple de 20 à 60 mm). Et, au moins du côté de la bordure longitudinale arrière 34, la face supérieure 32 du revêtement supérieur 3 présente une pente P (par exemple allant de 2% à 7%) qui est définie par l'embase 2.

La face supérieure 32 du revêtement supérieur 3 peut alors être en pente sur toute sa largeur (figure 9) ou sur une partie avant de sa largeur (figure 10).

Tel que développé ci-après, la face supérieure 32 du revêtement supérieur 3 comporte ainsi une bande longitudinale inclinée qui borde la bordure longitudinale arrière 34 et qui s'étend sur au moins une partie de la largeur de ce revêtement supérieur 3 ; la bordure longitudinale arrière 34 forme ainsi la bordure libre de cette bande longitudinale inclinée.

Par ailleurs, tel que représenté sur la figure 5, la face inférieure 31 du revêtement supérieur 3 est avantageusement munie d'alvéoles débouchantes 311 (dites encore « alvéoles 311 ») qui ont ici des contours hexagonaux pour former un profil en nid d'abeille.

En l'espèce, ces alvéoles débouchantes 311 sont agencées sous la forme d'une alternance de deux rangées transversales 3111, 3112 (chaque rangée transversale s'étendant perpendiculairement aux bordures longitudinales 33, 34).

Les rangées transversales 3111, 3112 se présentent ainsi sous la forme suivante :
- des premières rangées transversales 3111 disposées sous chaque bande d'appui 51, et
- des secondes rangées transversales 3112 disposées sous chaque rainure 52.

La cote des alvéoles 311 formant les premières rangées transversales 3111 (sous les bandes d'appui 51) est inférieure à la cote des alvéoles 311 formant les secondes rangées transversales 3112 (sous les rainures 52).

Cette caractéristique structurelle permet des gains de poids et de matière au niveau du revêtement supérieur 3, tout en préservant une résistance suffisante au niveau bandes d'appui 51.

Le long de la bordure arrière 34, la face inférieure 31 comporte une rangée longitudinale d'alvéoles 3113 dont la forme correspond à la moitié des alvéoles 311 des secondes rangées transversales 3112 de manière à renforcer mécaniquement cette bordure arrière 34.

De manière générale, au sein d'un équipement de sol 1, le revêtement supérieur 3 peut être réalisé dans une pièce unique ou dans plusieurs pièces 38 juxtaposées longitudinalement (par exemple sur la figure 7) et/ou latéralement (par exemple sur la figure 8).

A titre indicatif seulement, chaque pièce 38 du revêtement supérieur 3 a par exemple une longueur comprise entre 1 m et 100 m.

Le revêtement supérieur 3, avant sa pose, est avantageusement soit enroulé sur lui-même pour être stocké sous forme d'un rouleau, soit rangé à plat sous forme d'une plaque.

### Embase inférieure

L'embase inférieure 2 est réalisée dans un matériau apte à résister aux efforts exercés par l'appui des animaux dont les pattes reposent sur l'équipement de sol 1.

Dans les différents modes de réalisation de l'invention, l'embase inférieure 2 comporte deux surfaces opposées :
- une face inférieure 21, reposant sur le sol S, et
- une face supérieure 22, destiné à recevoir la face inférieure 31 du revêtement supérieur 3.

Cette embase inférieure 2 est encore délimitée par une ceinture de bordures (avantageusement de forme rectangulaire) :
- une bordure longitudinale avant 23, destinée à venir à proximité du cornadis C,
- une bordure longitudinale arrière 24, destinée à venir à distance du cornadis C et le long du couloir de circulation L, et
- deux bordures latérales 25, s'étendant entre les bordures longitudinales 23 et 24 précitées (figure 2).

Le contour de l'embase inférieure 2 correspond avantageusement au contour du revêtement supérieur 3 sus-jacent. Ce revêtement supérieur 3 est ainsi destiné à recouvrir entièrement l'embase inférieure 2 (la surface du revêtement supérieur 3 est identique, ou au moins approximativement identique, à la surface de l'embase inférieure 2).

Les bordures longitudinales 23, 24 s'étendent avantageusement parallèlement l'une par rapport à l'autre. Ces bordures longitudinales 23, 24 définissent la largeur de l'embase inférieure 2.

Les bordures latérales 25 s'étendent avantageusement, d'une part, parallèlement l'une par rapport à l'autre et, d'autre part, perpendiculairement par rapport aux bordures longitudinales 23, 24. Ces bordures latérales 25 définissent la longueur de l'embase inférieure 2.

De manière générale, cette embase inférieure 2 consiste par exemple en un caillebotis réalisée dans un matériau plastique.

Par « caillebotis », on entend avantageusement un panneau constitué de baguettes assemblées en quadrillage.

Par « matériau plastique », on englobe notamment le polyéthylène et le polyéthylène haute densité.

Encore de manière générale, l'embase inférieure 2 peut être réalisée dans une pièce unique ou bloc unique (voir par exemple figures 3 et 9), ou dans plusieurs pièces 27 ou plusieurs blocs juxtaposées longitudinalement (voir par exemple figure 7) et/ou juxtaposées latéralement (voir par exemple figures 8 et 10).

Les pièces 27 juxtaposées sont avantageusement fixées ensemble par le biais de structures d'emboîtement complémentaires 28, par exemple en forme de queue d'aronde (non représentée).

A titre indicatif seulement, chaque pièce de l'embase inférieure 2 a par exemple une longueur comprise entre 300 mm et 2400 mm.

La hauteur de l'embase inférieure 2 est quant à elle ajustée en fonction de la hauteur du revêtement supérieur 3 et de la hauteur recherchée pour l'équipement de sol 1.

### Premier mode de réalisation - Marche

Dans un premier mode de réalisation représenté sur les figures 1 à 5 et 9, l'équipement de sol 1 se présente sous la forme d'une marche adaptée à recevoir les pattes antérieures des animaux qui se nourrissent.

Dans le mode de réalisation selon les figures 1 à 5, la bande longitudinale rainurée 5 décrite ci-dessus (y compris ses rainures 52) s'étend alors sur toute la largeur, ou au moins approximativement toute la largeur, du revêtement supérieur 3.

Dans le mode de réalisation selon la figure 9, les faces 21, 22 opposées de l'embase inférieure 2 convergent dans un sens orienté depuis la bordure longitudinale avant 23 vers la bordure longitudinale arrière 24.

La pente de la face supérieure 22, par rapport à la face inférieure 21 destinée à venir à l'horizontal, est avantageusement de 2% à 7%.

Cette pente de la face supérieure 22 définit ainsi la pente descendante de la face supérieure 32 du revêtement supérieur 3 (sur toute sa largeur), en direction de la bordure longitudinale arrière 34.

De manière générale, la largeur d'un tel équipement de sol 1 (correspondant le cas échéant à la largeur R3 de la bande longitudinale rainurée 5 et de son embase inférieure 2) est comprise entre 350 et 600 mm.

### Second mode de réalisation - Stalle

Dans un second mode de réalisation représenté sur les figures 6 à 8 et 10, l'équipement de sol 1 se présente sous la forme d'une stalle adaptée à recevoir les quatre pattes des animaux qui se nourrissent.

De manière générale, dans ce second mode de réalisation, le revêtement supérieur 3 comporte avantageusement deux bandes longitudinales juxtaposées :
- une bande longitudinale avant 6 dont la face supérieure 3 est avantageusement horizontale, et
- une bande longitudinale arrière 5, 7, dont au moins une partie est avantageusement en pente descendante vers la bordure longitudinale arrière 34 du revêtement supérieur 3.

Selon le mode de réalisation des figures 6 à 8, la bande longitudinale rainurée 5 s'étend alors avantageusement sur une partie de la largeur du revêtement supérieur 3.

Ce revêtement supérieur 3 comporte ainsi deux bandes longitudinales juxtaposées :
- une bande longitudinale avant 6 dont la face supérieure 3 est dépourvue des rainures, et
- une bande longitudinale arrière formée par la bande longitudinale rainurée 5 décrite ci-dessus (cette bande longitudinale arrière est alors désignée également par le repère 5).

La bande longitudinale avant 6 est avantageusement plane, voire avec un relief antidérapant, s'étendant dans un plan horizontal.

Un tel équipement de sol 1 (et son revêtement supérieur 3 associé) présente avantageusement une largeur allant de 1200 à 2000 mm (par exemple de 1200 à 1600 mm pour les veaux et de 1600 à 2000 mm pour les animaux adultes). Dans ce cas, la bande longitudinale avant 6 présente par exemple une largeur allant de 600 à 1650 mm.

Toujours dans ce mode de réalisation, l'épaisseur de la bande longitudinale arrière 5 est avantageusement supérieure à l'épaisseur de la bande longitudinale avant 6.

Par exemple, l'épaisseur de la bande longitudinale avant 6 peut aller de 5 à 20 mm.

Pour cela, les deux bandes longitudinales 5, 6 du revêtement supérieur 3 peuvent être réalisées monoblocs.

Ces deux bandes longitudinales 5, 6 peuvent également être réalisées dans deux pièces distinctes et attenantes : une première pièce formant la bande longitudinale avant 6 et une seconde pièce formant la bande longitudinale rainurée 5.

De son côté, l'embase inférieure 2 comporte également deux bandes longitudinales juxtaposées : une bande longitudinale arrière 2a et une bande longitudinale avant 2b, s'étendant respectivement sous lesdites bandes longitudinales arrière 5 et avant 6 du revêtement supérieur 3.

Pour obtenir un revêtement supérieur 3 avec une face supérieure 32 horizontale, l'épaisseur de la bande longitudinale arrière 2a de l'embase inférieure 2 est inférieure à l'épaisseur de la bande longitudinale avant 2b de cette même embase inférieure 2.

Pour cela, les deux bandes longitudinales 2a, 2b de l'embase inférieure 2 peuvent être réalisées monoblocs.

Ces deux bandes longitudinales 2a, 2b de l'embase inférieure 2 peuvent également être réalisées dans deux pièces distinctes et attenantes : une première pièce formant la bande longitudinale arrière 2a et une seconde pièce formant la bande longitudinale avant 2b.

Ces deux pièces distinctes 2a, 2b sont avantageusement assemblées par des structures d'emboîtement complémentaires (non représentées), par exemple en forme de queue d'aronde.

Selon le mode de réalisation de la figure 10, le revêtement supérieur 3 comporte également deux bandes longitudinales juxtaposées :
- une bande longitudinale avant 6 dont la face supérieure 32 est dépourvue des rainures et s'étend avantageusement à l'horizontal, et
- une bande longitudinale arrière 7, dont la face supérieure 32 est dépourvue des rainures et s'étend avantageusement avec une pente descendante orientée vers la bordure longitudinale arrière 34.

Les bandes longitudinales avant 6 et arrière 7 sont avantageusement planes, voire avec un relief antidérapant, pour définir ensemble une face supérieure 32 diédrique.

Un tel équipement de sol 1 (et son revêtement supérieur 3 associé) présente avantageusement une largeur allant de 1200 à 2000 mm (par exemple de 1200 à 1600 mm pour les veaux et de 1600 à 2000 mm pour les animaux adultes). Dans ce cas, la bande longitudinale avant 6 présente par exemple une largeur allant de 600 à 1650 mm.

Toujours dans ce mode de réalisation, l'épaisseur du revêtement supérieur 3 (y compris les bandes longitudinales avant 6 et arrière 7) est avantageusement constante.

Par exemple, l'épaisseur du revêtement supérieur 3 peut aller de 5 à 20 mm.

Pour cela, les deux bandes longitudinales 6, 7 du revêtement supérieur 3 peuvent être réalisées monoblocs.

Ces deux bandes longitudinales 6, 7 peuvent également être réalisées dans deux pièces distinctes et attenantes : une première pièce formant la bande longitudinale avant 6 et une seconde pièce formant la bande longitudinale arrière 7.

De son côté, l'embase inférieure 2 comporte également deux bandes longitudinales juxtaposées : une bande longitudinale arrière 2a et une bande longitudinale avant 2b, s'étendant respectivement sous lesdites bandes longitudinales arrière 7 et avant 6 du revêtement supérieur 3.

Pour obtenir la bande longitudinale avant 6 « horizontale », l'épaisseur de la bande longitudinale avant 2b de l'embase inférieure 2 est avantageusement constante.

Les faces 2a1, 2a2 opposées de la bande longitudinale arrière 2a de l'embase inférieure 2 forment respectivement une partie avant des faces 21, 22 opposées de l'embase inférieure 2. Et pour obtenir la bande longitudinale arrière 7 inclinée, les faces 2a1, 2a2 opposées de la bande longitudinale arrière 2a de l'embase inférieure 2 convergent dans un sens orienté vers la bordure longitudinale arrière 24.

La pente de la face supérieure 2a2, par rapport à la face inférieure 2a1 destinée à venir à l'horizontal, est avantageusement de 2% à 7%.

Cette pente de la face supérieure 2a2 définit ainsi la pente de la bande longitudinale arrière 7 du revêtement supérieur 3.

Ainsi, de manière générale, la face supérieure 22 de l'embase inférieure 2 est avantageusement de forme générale diédrique, pour définir ensemble la face supérieure 32 diédrique du revêtement supérieur 3.

Pour cela, les deux bandes longitudinales 2a, 2b de l'embase inférieure 2 peuvent être réalisées monoblocs.

Ces deux bandes longitudinales 2a, 2b de l'embase inférieure 2 peuvent également être réalisées dans deux pièces distinctes et attenantes : une première pièce formant la bande longitudinale arrière 2a et une seconde pièce formant la bande longitudinale avant 2b (figure 10).

Ces deux pièces distinctes 2a, 2b sont avantageusement assemblées par des structures d'emboîtement complémentaires (non représentées), par exemple en forme de queue d'aronde.

### Mise en oeuvre

La solution technique selon l'invention peut être mise en oeuvre aussi bien en rénovation qu'en neuf.

L'aménagement de l'aire d'alimentation A avec ledit au moins un équipement de sol 1 comprend avantageusement plusieurs opérations successives.

Tout d'abord, la ou les embases inférieures 2 (formées chacune d'une ou plusieurs pièces) sont posées sur le sol S.

Le cas échéant, les embases inférieures 2 de deux équipements de sol 1 juxtaposés sont reliées par leurs structures d'emboîtement complémentaires.

Ensuite, ledit au moins un revêtement supérieur 3 est posé sur ladite au moins une embase inférieure 2.

Selon le cas, l'embase inférieure 2 est recouverte par un revêtement supérieur 3 formé par :
- plusieurs pièces 38 dont les joints 39 sont croisés, ou
- un seule pièce recouvrant toute la longueur de l'embase inférieure 2.

Dans le cas de joints 39 au niveau du revêtement supérieur 3, ces joints 39 sont avantageusement décalés longitudinalement par rapport aux éventuelles structures d'emboîtement complémentaires 28 de l'embase inférieure 2 (figure 7).

Cet agencement en quinconce permet de renforcer l'équipement de sol 1, de sorte à limiter le risque de dissociation des pièces formant l'embase inférieure 2 et/ou le revêtement supérieur 3.

On notera encore que chaque pièce 38 est avantageusement terminée latéralement par une demi-bande d'appui 515, destinée à former une bande d'appui 51 « complète » avec la pièce 38 juxtaposée.

Une fois superposé l'un sur l'autre, l'embase inférieure 2 et le revêtement supérieur 3 peuvent être assemblés l'un avec l'autre par :
- un emboîtement de forme dans laquelle la face inférieure 31 du revêtement supérieur 3 et la face supérieure 22 de l'embase inférieure 2 comportent des structures complémentaires du type tenon / mortaise (par exemple face supérieure 22 de l'embase inférieure 2 comporte des structures saillantes venant s'insérer dans les alvéoles débouchantes 311 de la face inférieure 31 du revêtement supérieur 3), et/ou
- des moyens de fixation mécanique, par exemple des vis.

L'équipement de sol 1 peut également être fixé avec le sol S.

En fonctionnement et selon les modes de réalisation, les animaux montent soit leurs deux pattes antérieures pour la forme « marche », soit leurs quatre pattes pour la forme « stalle ».

Les éventuels liquides tombant sur l'équipement de sol 1 sont alors conduits et concentrés par simple gravité au travers des rainures 51 ou par la pente de la face supérieure 32 du revêtement supérieure 3, cela vers le couloir de circulation L où ils peuvent être déplacés par le racleur U.

La face supérieure 32 du revêtement supérieure 3 reste ainsi, en permanence, relativement sèche. Les pieds surélevés des animaux sont au sec tout au long de la période l'alimentation, avec notamment les avantages sanitaires qui en découlent.

## Revendications

1. Equipement de sol adapté à surélever les pattes d'animaux d'élevage, par exemple pour des vaches laitières, au sein d'une aire d'alimentation bordant une table d'affouragement,
**caractérisé en ce que** ledit équipement de sol (1), en forme de plaque, comprend :
- une embase inférieure (2) comportant une face inférieure (21) destinée à reposer sur le sol de ladite aire d'alimentation et une face supérieure (22) opposée, et
- un revêtement supérieur (3), rapporté sur la face supérieure (22) de ladite embase inférieure (2), qui est réalisé dans un matériau apte à subir une déformation élastique et destiné à servir de surface d'appui pour les animaux.

2. Equipement de sol selon la revendication 1, **caractérisé en ce que** le revêtement supérieur (3) est délimité par une bordure longitudinale avant (33), par une bordure longitudinale arrière (34) et par deux bordures latérales (35),
lequel revêtement supérieur (3) comporte une bande longitudinale rainurée (5) qui borde ladite bordure longitudinale arrière (34) et qui s'étend sur au moins une partie de la largeur dudit revêtement supérieur (3),
laquelle bande longitudinale rainurée (5) comporte une pluralité de bandes d'appui (51) qui sont séparées les unes des autres par des rainures (52) destinées à recevoir les liquides s'écoulant sur ledit revêtement supérieur (3),
lesquelles rainures (52) s'étendent perpendiculairement, ou au moins approximativement perpendiculairement, par rapport auxdites bordures longitudinales (33, 34) dudit revêtement supérieur (3),
lesquelles rainures (52) comportent chacune une face de fond (522) qui présente une pente descendante depuis une extrémité avant supérieure (5221) située du côté de la bordure longitudinale avant (33) dudit revêtement supérieur (3) jusqu'à une extrémité arrière inférieure (5222) débouchant au niveau de ladite bordure longitudinale arrière (34) dudit revêtement supérieur (3).

3. Equipement de sol selon la revendication 2, **caractérisé en ce que** la bande longitudinale rainurée (5) présente :
- une largeur comprise entre 200 et 800 mm, et/ou
- une épaisseur comprise entre 20 et 60 mm.

4. Equipement de sol selon l'une quelconque des revendications 2 ou 3, **caractérisé en ce que** la bande longitudinale rainurée (5) s'étend sur toute la largeur, ou au moins approximativement toute la largeur, du revêtement supérieur (3).

5. Equipement de sol selon l'une quelconque des revendications 2 ou 3, **caractérisé en ce que** la bande longitudinale rainurée (5) s'étend sur une partie de la largeur du revêtement supérieur (3) qui comporte deux bandes longitudinales juxtaposées :
- une bande longitudinale avant (6) dont la face supérieure est dépourvue de rainures (52), et
- une bande longitudinale arrière formée par ladite bande longitudinale rainurée (5).

6. Equipement de sol selon la revendication 5, **caractérisée en ce que** le revêtement supérieur (3) présente une largeur allant de 1200 à 2000 mm.

7. Equipement de sol selon l'une quelconque des revendications 5 ou 6, **caractérisé en ce que** l'épaisseur de la bande longitudinale arrière (5) est supérieure à l'épaisseur de la bande longitudinale avant (6),
**en ce que** l'embase inférieure (2) comporte une bande longitudinale arrière (2a) et une bande longitudinale avant (2b), s'étendant respectivement sous lesdites bandes longitudinales arrière (5) et avant (6) du revêtement supérieur (3),
et **en ce que** l'épaisseur de ladite bande longitudinale arrière (2a) de ladite embase inférieure (2) est inférieure à l'épaisseur de ladite bande longitudinale avant (2b) de ladite embase inférieure (2).

8. Equipement de sol selon l'une quelconque des revendications 2 à 7, **caractérisé en ce que** le revêtement supérieur (3) comporte une face inférieure (31) muni d'alvéoles débouchantes (311), avantageusement sous la forme d'une alternance de deux rangées transversales (3111, 3112) d'alvéoles (311) :
- une première rangée transversale (3111) disposée sous chaque bande d'appui (51), et
- une seconde rangée transversale (3112) disposée sous chaque rainure,
et **en ce que** la cote des alvéoles (311) de ladite première rangée transversale (3111) est inférieure à la cote des alvéoles (311) de ladite seconde rangée transversale (3112).

9. Equipement de sol selon l'une quelconque des revendications 2 à 8, **caractérisé en ce que** les bandes d'appui (51) comportent des gorges (511) débouchant dans les rainures (52) attenantes.

10. Equipement de sol selon la revendication 1, **caractérisé en ce que** la face inférieure (21) et la face supérieure (22) de l'embase inférieure (2) convergent, en direction d'une bordure longitudinale arrière (24), pour définir une pente descendante de la face supérieure (32) du revêtement supérieure (3).

11. Equipement de sol selon la revendication 10, **caractérisé en ce que** la face supérieure (32) du revêtement supérieure (3) est en pente descendante sur toute sa largeur ou sur une bande longitudinale arrière (7).

12. Equipement de sol selon l'une quelconque des revendications 10 ou 11, **caractérisé en ce que** l'embase inférieure (2) comporte une bande longitudinale arrière (2a) et une bande longitudinale avant (2b),
**en ce que** l'épaisseur de la bande longitudinale avant (2b) de l'embase inférieure (2) est constante, et
**en ce que** les faces (2a1, 2a2) opposées de la bande longitudinale arrière (2a) de l'embase inférieure (2) convergent dans un sens orienté vers la bordure longitudinale arrière (24), pour définir ladite bande longitudinale arrière (7) en pente descendante.

13. Equipement de sol selon l'une quelconque des revendications 1 à 12, **caractérisé en ce que** l'embase inférieure (2) consiste en un caillebotis réalisée dans un matériau plastique.

14. Equipement de sol selon l'une quelconque des revendications 1 à 13, **caractérisé en ce qu'**il comporte :
- une épaisseur allant de 50 à 100 mm, et
- une longueur allant de 1 m à 100 m.

15. Enceinte pour l'élevage d'animaux comprenant une aire d'alimentation pour animaux d'élevage qui est raccordée à une table d'affouragement (T) via un cornadis (C), **caractérisée en ce qu'**au moins un équipement de sol (1) selon l'une quelconque des revendications 1 à 14 est solidarisé avec le sol (S) de ladite aire d'alimentation (A), le long dudit cornadis (C).
